# EUROPÄISCHE PATENTSCHRIFT

(11) **EP 1 207 541 B1**
(45) Veröffentlichungstag und Bekanntmachung des Hinweises auf die Patenterteilung: **15.09.2004**
(21) Anmeldenummer: 01126862.0
(22) Anmeldetag: 12.11.2001
(51) Int. Cl.: H01H 1/00, H01H 1/54

(54) **Mikroschalter mit verstärkter Kontaktkraft**
Microswitch with reinforced contact force
Microrupteur avec force de contact renforcée

(30) Priorität: 15.11.2000 DE 10056656
(43) Veröffentlichungstag der Anmeldung: 22.05.2002
(73) Patentinhaber: Little Things Factory GmbH, 98693 Ilmenau (DE)
(72) Erfinder: Frank, Thomas, 98693 Ilmenau (DE)
(74) Vertreter: Engel, Christoph Klaus

(56) Entgegenhaltungen:
- WO-A-99/63559
- DE-A- 19 819 919
- US-A- 5 742 235
- US-A- 5 945 898
- ALLAN R: "MEMS TECHNOLOGY PURSUED FOR THE DEVELOPMENT OF MICROMACHINED SILICON VARIABLE INDUCTORS AND LATCHING ACCELEROMETERS" , ELECTRONIC DESIGN, PENTON PUBLISHING, CLEVELAND, OH, US, VOL. 45, NR. 13, PAGE(S) 27-28,30,32 XP000729080 ISSN: 0013-4872 * das ganze Dokument *

## Beschreibung

Die vorliegende Erfindung betrifft einen Mikroschalter mit verstärkter Kontaktkraft mit mindestens zwei Schaltkontakten, die in einer Ruhelage durch einen Kontaktspalt voneinander beabstandet sind, wobei mindestens einer der Schaltkontakte beweglich gelagert ist, wobei mindestens eine Kontaktfeder den beweglichen Schaltkontakt in seiner Ruhelage hält, und wobei die Schaltkontakte geschlossen werden, wenn eine vorbestimmte Schaltkraft der Kontaktfederkraft entgegenwirkt.

Es sind vielfältige Bauformen von Schaltern bekannt. In jüngerer Zeit wird versucht, Schalter weiter zu miniaturisieren, um beispielsweise mechanische Schaltfunktionen in Mikrosystemen auszuführen. Außerdem sind mechanische Schalter bekannt, die verschiedene Sensoraufgaben zu erfüllen haben.

In der WO 96/21937 ist ein mechanischer Beschleunigungsschalter beschrieben, der eine Federzunge mit einer seismischen Masse und einem Kontakt besitzt. Wenn eine Beschleunigungskraft auf die seismische Masse einwirkt, werden die Schaltkontakte dieses Beschleunigungsschalters geschlossen, so daß ein Strom fließen kann. Das Problem dieses Beschleunigungsschalters besteht darin, daß die Schaltkontakte nur solange geschlossen sind, wie die Beschleunigungskraft ausreichend hoch ist. Insbesondere in der Nähe des Schwellwertes der Beschleunigungskraft, bei welchem ein Schaltvorgang ausgelöst werden soll, besteht außerdem das Problem, daß die zwischen den Schaltkontakten wirkende Kontaktkraft zum Teil zu gering ist, so daß die Übergangswiderstände zu hoch werden, wodurch die Schaltfunktion nicht sicher detektiert werden kann oder die Kontaktflächen zu stark beansprucht werden.

In der WO 97/06543 ist ein anderer Beschleunigungsschalter beschrieben, bei welchem die Beschleunigungskraft auf einen Permanentmagneten einwirkt, der gleichzeitig die seismische Masse darstellt. Durch eine spezielle Lagerung wird es ermöglicht, die Schaltdauer geringfügig zu verlängern, wenn die Beschleunigungskraft einen bestimmten Wert überschreitet. Jedoch besteht auch bei dieser Ausführungsform die Schwierigkeit, daß bei Beschleunigungskräften, die den Schwellwert nicht deutlich überschreiten, die Schaltfunktion gestört sein kann, da die Beschleunigungskraft gegen eine permanent wirkende Federkraft einwirken muß. Außerdem ist es nicht möglich, die Kontaktkraft zusätzlich zu erhöhen und den Schaltzustand über einen beliebig langen Zeitraum aufrecht zu erhalten, wenn die Beschleunigungskraft nur kurzzeitig den Schwellwert überschreitet.

In der US 5,742,235 ist ein Schalter beschrieben, der insbesondere das Auftreten von Erdbeben signalisieren soll. Dazu ist ein Massekörper an einer Kontaktfeder befestigt, der die Kontaktfeder beim Auftreten einer Beschleunigungskraft verbiegt und damit einen Schaltkontakt schließt. Die Funktionsweise dieses Schalters ist entscheidend von der Größe und der Einwirkzeit der Schaltkraft abhängig. Weiterhin kann ein Selbsthalteeffekt durch Anordnung eines Elektromagneten realisiert werden.

In der DE 198 19 919 A1 ist ein mikromechanischer Schalter gezeigt, der auf Beschleunigungskräfte reagiert. Zur Bereitstellung einer ausreichend hohen Kontaktkraft werden relativ hohe Massen verwendet. Die Arretierung des Schalters im geschalteten Zustand erfolgt auf mechanische Art durch einrastende, federnd gelagerte Klinken. Es wird ober auch die Möglichkeit einer magnetischen Arretierung genannt. Permanentmagnetische Arretierungen sind. z.B. aus der DE 192 3972 U bekannt.

Aus der als nächstliegend angesehenen DE 43 15 842 A1 ist ein Beschleunigungsaufnehmer bekannt, der zwei Schaltkontakte und einen mit diesem in Wirkverbindung stehenden Schaltmagneten besitzt. Um einen Schaltvorgang auszulösen, muss der Schaltmagnet entgegen einer Federkraft bewegt werden. Bei nachlassender Beschleunigungskraft kehrt der Schaltmagnet in die Ausgangsposition zurück, so dass die Schaltkontakte wieder öffnen.

Eine Aufgabe der vorliegenden Erfindung besteht somit darin, einen sensorischen Mikroschalter bereitzustellen, der eine vorbestimmte, ausreichend hohe Kontaktkraft aufweist, die unabhängig von der einwirkenden Schaltkraft und von der Dauer des Einwirkens dieser Schaltkraft ist. Die Schaltkraft kann beispielsweise eine Beschleunigungskraft sein, jedoch sollen auch andere Kräfte nachweisbar sein. Eine weitere Aufgabe der vorliegenden Erfindung besteht darin, insbesondere einen Beschleunigungsschalter bereitzustellen, mit welchem dauerhaft nachweisbar ist, daß eine Beschleunigungskraft einen Schwellwert überschritten hat, selbst wenn die Beschleunigungskraft nur kurzzeitig oberhalb des Schwellwertes lag. Schließlich soll der sensorische Mikroschalter so aufgebaut sein, daß er mit herkömmlichen lithographischen Verfahrensschritten herstellbar und in Mikrosysteme leicht integrierbar ist.

Diese und weitere Aufgaben werden durch einen sensorischen Mikroschalter gelöst, welcher im Anspruch 1 näher definiert ist.

Diese und weitere Aufgaben werden durch einen sensorischen Mikroschalter gelöst, bei welchem die beiden Schaltkontakte magnetisch mit einem feststehenden Permanentmagneten gekoppelt sind, wobei der Kontaktspalt, die wirksame Magnetkraft und die Federkraft dimensioniert sind, um den beweglichen Kontakt in der Ruhelage zu belassen, wenn keine oder eine unter einem Schwellwert liegende Schaltkraft einwirkt, und um die Schaltkontakte zu schließen, wenn die Schaltkraft den Schwellwert überschreitet.

Der feststehende Permanentmagnet bewirkt, daß der durch die Schaltkontakte fließende Magnetfluß nur noch von der Größe des Kontaktspaltes aber nicht mehr von der relativen Position des Permanentmagneten abhängig ist. Wenn eine ausreichend große Schaltkraft einwirkt, verringert sich der Kontaktspalt soweit, daß sich die beiden Schaltkontakte mit einer progressiv ansteigenden Kontaktkraft magnetisch anziehen, so daß beim Schließen der Schaltkontakte eine hohe Kontaktkraft wirkt, die nicht unmittelbar von der Schaltkraft abhängig ist.

Eine zu bevorzugende Ausführungsform des Mikroschalters ist als Beschleunigungsschalter ausgelegt, wobei an den beweglichen Schaltkontakt eine seismische Masse gekoppelt ist, auf welche eine Beschleunigungskraft als Schaltkraft einwirkt. Dabei ist es besonders zweckmäßig, wenn die seismische Masse am freien Ende einer Federzunge angeordnet ist, wobei der Permanentmagnet und die Federkraft der Federzunge so aufeinander abgestimmt sind, daß die Schaltkontakte dauerhaft geschlossen bleiben, sobald die Beschleunigungskraft den Schwellwert einmalig überschreitet und damit einen Initialschaltvorgang auslöst. Auf diese Weise kann der Beschleunigungsschalter auch zu Nachweiszwecken verwendet werden, wenn geprüft werden soll, ob die zu überwachende Beschleunigungskraft zu einem beliebigen Zeitpunkt einen bestimmten Schwellwert überschritten hat. Zur Aufrechterhaltung des eingeschalteten Zustands dieses Beschleunigungsschalters ist kein Stromfluß erforderlich, so daß der Beschleunigungsschalter gegebenenfalls völlig autark betrieben werden kann.

Die erfindungsgemäße Ausführung des sensorischen Mikroschalters dient vor allem der weiteren Erhöhung der resultieren Kontaktkraft, wozu der über die Schaltkontakte und durch den Kontaktspalt laufende Magnetkreis weiterhin durch eine Sensorspalt und ein Sensorelement verläuft, wobei die Querschnittsfläche des Sensorspalts größer als die Querschnittsfläche des Kontaktspalts ist und wobei die Schaltkraft auf das Sensorelement einwirkt. Wenn das Sensorelement auch in diesem Fall eine federnd gelagerte seismische Masse ist, können mit sehr kleinen Beschleunigungsschaltern geringe Beschleunigungskräfte nachgewiesen werden, da die notwendige Kontaktkraft auch bei einem mikromechanischen Aufbau erzielbar ist. Der erfindungsgemäße Mikroschalter ermöglicht damit erstmals die weitere Miniaturisierung eines Beschleunigungsschalters. Bisher bestand das Problem, daß eine zu kleine seismische Masse bei den nachzuweisenden Beschleunigungskräften keine ausreichend hohe Kontaktkraft zwischen den Schaltkontakten bewirken konnte. Da erfindungsgemäß die Querschnittsfläche des Sensorspalts deutlich größer als die Querschnittsfläche des Kontaktspalts ist, erhöht sich die im Kontaktspalt wirkende Magnetkraft wesentlich stärker als die im Sensorspalt wirkende Magnetkraft, da der magnetische Fluß in dem ausgebildeten Magnetkreis an jeder Stelle gleich ist.

Bei abgewandelten Ausführungsformen können andere Zustandsänderungen die Schaltkraft hervorrufen. Beispielsweise ist es möglich, das Sensorelement als Bi-Metall auszulegen, so daß die Schaltkraft aufgrund einer Temperaturänderung des Sensorelements hervorgerufen wird.

Eine weitergebildete Ausführungsform des Mikroschalters zeichnet sich dadurch aus, daß weiterhin ein Elektromagnet angeordnet ist, durch welchen im stromdurchflossenen Zustand ein Momentanmagnetfeld induziert wird, welches dem Permanentmagnetfeld entgegenwirkt und die Schaltkontakte in die Ruhelage zurück versetzt, wenn diese vorher im geschlossenen Zustand fixiert sind. Der Elektromagnet kann beispielsweise durch eine in den Mikroschalter integrierte elektrische Spule gebildet sein, an die zum Rücksetzen des Mikroschalters ein kurzzeitiger Stromimpuls angelegt wird.

Weiterhin kann es vorteilhaft sein, wenn der Mikroschalter einen beweglichen Schaltkontakt und zwei feststehende Schaltkontakte aufweist, so daß ein Wechselschalter realisierbar ist. Vorzugsweise ist der Mikroschalter in einem mit Schutzgas gefüllten Gehäuse gekapselt, um die Schaltkontakte vor Verschmutzung und Stromabbrand zu schützen.

Weitere Vorteile, Einzelheiten und Weiterbildungen ergeben sich aus der nachfolgenden Beschreibung bevorzugter Ausführungsformen der Erfindung, unter Bezugnahme auf die Zeichnung. Es zeigen:
- Fig. 1: eine vereinfachte perspektivische Ansicht eines sensorischen Mikroschalters, der als Beschleunigungsschalter arbeitet;
- Fig. 2: eine Explosionsdarstellung einer abgewandelten Ausführungsform des Beschleunigungsschalters;
- Fig. 3: eine perspektivische Ansicht einer abgewandelten Ausführungsform des Beschleunigungsschalters zur Erfassung von Beschleunigungskräften mit entgegengesetzem Richtungssinn;
- Fig. 4: eine Draufsicht auf einen sensorischen Mikroschalter mit einem Elektromagneten zum Zurücksetzen der Schaltkontakte in die Ruheposition;
- Fig. 5: eine Schnittansicht des in Fig. 4 gezeigten Mikroschalters;
- Fig. 6: eine Ansicht von oben einer abgewandelten Ausführungsform des in Fig. 4 gezeigten Mikroschalters, wobei zwei Elektromagneten vorgesehen sind;
- Fig. 7: eine Prinzipdarstellung einer abgewandelten Ausführungsform der Lagerung einer seismischen Masse zur Verwendung in einen Beschleunigungsschalter;
- Fig. 8: eine perspektivische Ansicht des erfindungsgemäßen sensorischen Mikroschalters, bei welchem ein Kontaktspalt und ein Sensorspalt zur Verstärkung der Kontaktkraft vorgesehen sind;
- Fig. 9: eine weitere Ausführungsform eines Beschleunigungsschalters mit Kontaktspalt in einer Ansicht von oben;
- Fig. 10: eine nochmals abgewandelte Ausführungsform des in Fig. 9 gezeigten Beschleunigungsschalters in einer Ansicht von oben.

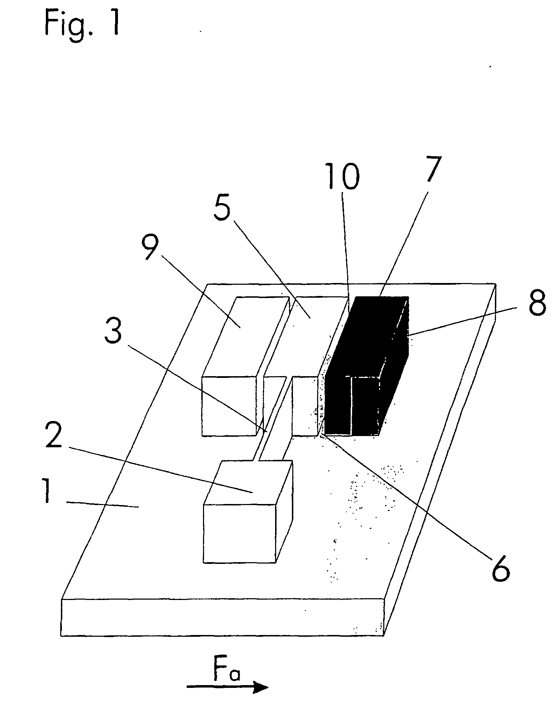

In Fig. 1 ist in einer perspektivischen Ansicht eine einfache Form eines sensorischen Mikroschalters gezeigt. Der Mikroschalter ist auf einer Grundplatte 1 aufgebaut. Die Grundplatte 1 kann ein Trägersubstrat, wie beispielsweise Siliziumdioxyd sein. Die Bestandteile des Mikroschalters können generell durch lithographische bzw. mikrotechnische Verfahrensschritte erzeugt bzw. aufgebaut werden. Auf der Grundplatte 1 ist ein Lagerblock 2 befestigt, in welchem eine Federzunge 3 eingespannt ist. An dem freien Ende der Federzunge 3 ist eine seismische Masse 5 befestigt, so daß die Federzunge 3 die Führung der an sich frei beweglichen Masse 5 übernimmt. Durch diese Lagerung kann die seismische Masse 5 parallel zur Oberfläche der Grundplatte 1 bewegt werden, wobei die Federzunge 3 verbogen wird, so daß die resultierende Federkraft die seismische Masse 5 in der Ruheposition hält, wenn keine anderen äußeren Kräfte wirken. Die seismische Masse 5 besteht bei dieser Ausführungsform aus einem elektrisch leitfähigen Material, so daß an ihrer Oberfläche ein beweglicher Schaltkontakt 6 bereitgestellt wird. Dem beweglichen Schaltkontakt 6 gegenüber ist ein feststehender Schaltkontakt 7 positioniert. Der feststehende Schaltkontakt 7 ist ohne Freiheitsgrad auf der Grundplatte 1 befestigt. Weiterhin ist der feststehende Schaltkontakt selbst aus hartmagnetischem, vormagnetisiertem Material ausgebildet oder magnetisch eng mit einem Permanentmagneten 8 gekoppelt.

Auf der anderen Seite der seismischen Masse 5 ist ein Anschlagblock 9 auf der Grundplatte 1 befestigt. Dieser verhindert eine zu weite Auslenkung der seismischem Masse 5, wenn eine entgegensetzte Beschleunigungskraft einwirken sollte. Damit wird die Überdehnung der Federzunge 3 und eine mögliche Zerstörung des Beschleunigungssensors verhindert.

Wenn auf den in Fig. 1 gezeigten Beschleunigungsschalter eine Beschleunigungskraft Fₐ in der durch einen Pfeil in der Fig. bezeichneten Richtung einwirkt, erfährt die seismische Masse 5 eine Beschleunigung, so daß es zu einer Bewegung in Richtung zum feststehenden Schaltkontakt 7 kommt. Dadurch wird ein zwischen dem beweglichen Schaltkontakt 6 und dem feststehenden Schaltkontakt 7 bestehender Kontaktspalt 10 verkleinert. Der vom Permanentmagneten 8 ausgebildete magnetische Fluß, der durch den Kontaktspalt 10 verläuft, induziert eine permanente Magnetkraft, die bei einer ausreichenden Verringerung des Kontaktspaltes 10 groß genug ist, um die seismische Masse 5 an den feststehenden Schaltkontakt 7 anzuziehen. So lange keine Beschleunigungskraft Fₐ einwirkt, ist die Permanentmagnetkraft nicht ausreichend, um die seismische Masse 5 entgegen der von der Federzunge 3 erzeugten Federkraft an den feststehenden Schaltkontakt 7 anzuziehen. Sobald die Beschleunigungskraft jedoch einen vorbestimmten Schwellwert überschreitet, werden die beiden Schaltkontakte so stark angezogen, daß der bewegliche Schaltkontakt 6 auch bei gleichbleibender oder nachlassender Beschleunigungskraft schlagartig an den feststehenden Schaltkontakt 7 angepreßt wird. Auf diese Weise ist sichergestellt, daß die Schaltkontakte mit einer ausreichend hohen Kontaktkraft zusammengepreßt werden, so daß ein definierter, geringer Übergangswiderstand besteht.

Bei der Dimensionierung des Kontaktspaltes 10 und des Permanentmagneten 8 muß entschieden werden, ob die Magnetkraft ausreichend sein soll, den beweglichen Schaltkontakt 6 dauerhaft am feststehenden Schaltkontakt 7 zu fixieren, selbst wenn die Beschleunigungskraft nachläßt. Ein so angepaßter Beschleunigungsschalter wird nur eine einzige Schaltfunktion ausführen. Damit ist aber sichergestellt, daß das Überschreiten der Beschleunigungskraft über einen vorgegebenen Schwellwert später zu einem beliebigen Zeitpunkt nachgewiesen werden kann. Nachgeordnete Schaltungseinheiten können den Schaltvorgang sicher detektieren, da die Schaltkontakte geschlossen bleiben, selbst wenn die Beschleunigungskraft nur für einen sehr kurzen Zeitraum den Schwellwert überschreitet. Ein auf diese Weise konfektionierter Beschleunigungsschalter kann auch zu Nachweiszwecken ohne eine dauerhaft angeschlossene elektrische Schaltung verwendet werden. Wenn dieser Beschleunigungssensor beispielsweise an einer zu überwachenden Einheit befestigt ist, kann zu einem beliebigen Zeitpunkt durch Anlegen einer Spannung an die Schaltkontakte überprüft werden, ob auf die zu überwachende Einheit irgendwann eine zu hohe Beschleunigungskraft eingewirkt hat.

Die Empfindlichkeit des Beschleunigungsschalters kann durch Veränderung der seismischen Masse 5 und der Federsteifigkeit der Federzunge 3 beeinflußt werden. Vorzugsweise sind der Lagerblock 2, die Federzunge 3 und die seismische Masse 5 einstückig aus weichmagnetischem Material gefertigt (beispielsweise Nickel oder Nickel-Eisen). Wenn die Schaltkontakte einander berühren ist die resultierende Kontaktkraft im wesentlichen durch die Magnetkraft bestimmt, wobei die Kontaktflächen so ausgebildet werden, daß die Magnetkraft angenähert umgekehrt proportional zum Quadrat des Abstandes zwischen den Schaltkontakten ist. Aufgrund dieser Nichtlinearität der resultierenden Magnetkraft kann die Kraft-Weg-Kennlinie so eingestellt werden, daß der Einfluß der Magnetkraft auf die seismische Masse 5 in der Ruheposition weitgehend vernachlässigt werden kann.

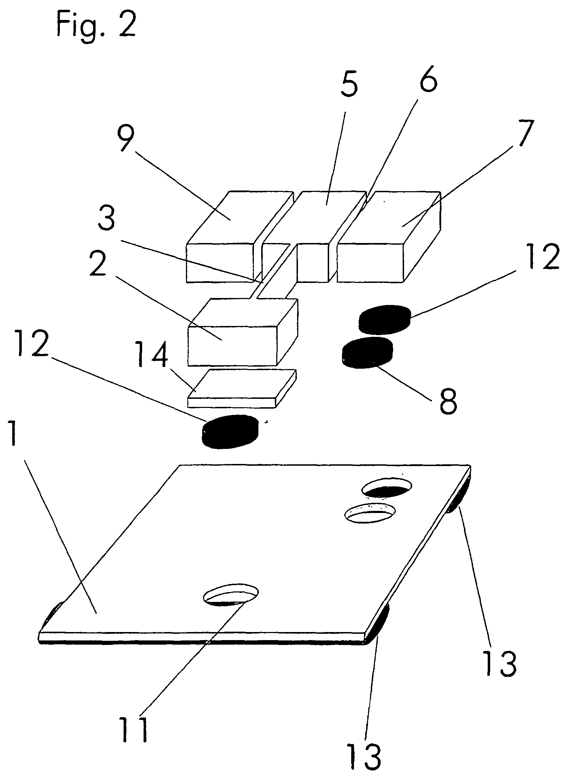

Fig. 2 zeigt eine Explosionszeichnung einer abgewandelten Ausführungsform des Beschleunigungsschalters. Um eine elektrische Verbindung der Schaltkontakte mit externen Schaltungseinheiten zu ermöglichen, sind in Durchgangslöchern 11 Durchkontakte 12 vorgesehen, die den beweglichen Schaltkontakt 6 bzw. den feststehenden Schaltkontakt 7 elektrisch mit auf der Unterseite der Grundplatte 1 liegenden Lötkontakten 13 verbinden. Um die freie Beweglichkeit der Federzunge 3 und der seismischen Masse 5 zu ermöglichen, befindet sich zwischen dem Lagerblock 2 und der Grundplatte 1 ein Distanzstück 14, welches bei der Anwendung lithographischer bzw. mikrotechnischer Verfahrensschritte während der Herstellung des Lagerblocks 2 ohne zusätzlichen Aufwand erzeugt werden kann. Das Permanentmagnetfeld wird bei dieser Ausführungsform von dem Permanentmagneten 8 erzeugt, welcher unterhalb des feststehenden Schaltkontaktes 7 in der Grundplatte 1 angeordnet ist. Durch diese Gestaltung kann ein elektrisch nicht oder schlecht leitendes permanentmagnetisches Material verwendet werden, da die elektrische Kontaktierung separat über den Durchkontakt 12 erfolgt.

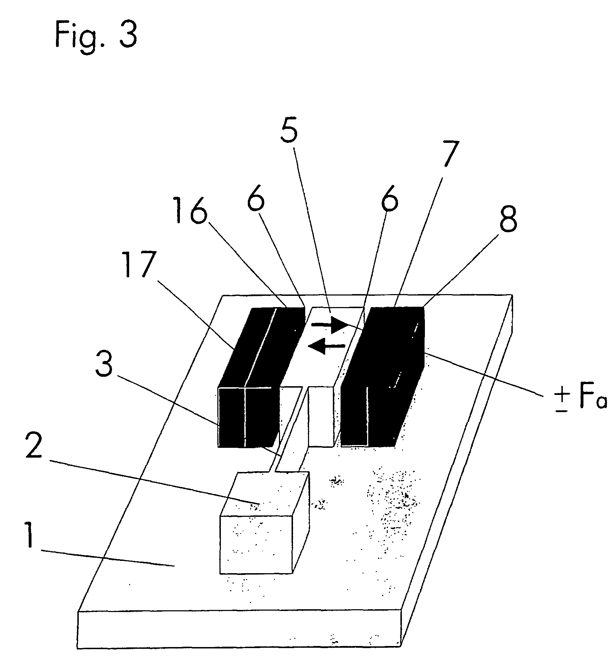

Fig. 3 zeigt eine perspektivische Ansicht einer weiterhin abgewandelten Ausführungsform des Beschleunigungsschalters. Bei dieser Variante wurde eine symmetrische Anordnung von Schaltkontakten gewählt, wobei ein zweiter feststehender Schaltkontakt 16 bereitsteht, der mit einem zweiten Permanentmagneten 17 gekoppelt ist. Damit ist es möglich, Beschleunigungskräfte festzustellen, die in entgegengesetzten Richtungen wirken (± Fₐ). Die seismische Masse 5 besitzt dazu an beiden Seiten Kontaktflächen, die den beweglichen Schaltkontakt 6 bilden.

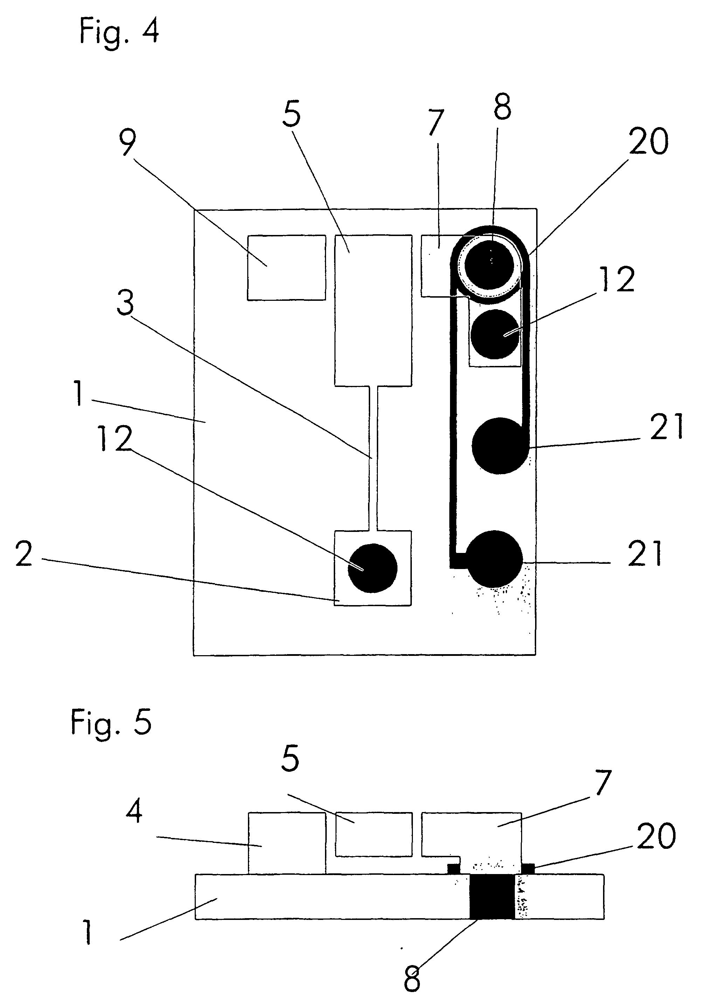

Fig. 4 zeigt die Draufsicht einer veränderten Ausführungsform des Beschleunigungsschalters. Der besondere Vorteil dieser Ausführungsform besteht darin, daß nach einem Schaltvorgang, der die Schaltkontakte dauerhaft geschlossen hat, trotzdem ein Rücksetzen des beweglichen Schaltkontaktes in die Ruheposition möglich ist. Dazu ist weiterhin ein Elektromagnet vorgesehen, der durch eine elektrische Spule 20 gebildet ist, an die über Anschlußkontakte 21 ein Stromimpuls angelegt werden kann. Die elektrische Spule 20 ist gegenüber dem Permanentmagneten 8 so angeordnet, daß im stromdurchflossenen Zustand ein Momentanmagnetfeld erzeugt wird, welches dem Permanentmagnetfeld entgegenwirkt. Dadurch läßt die resultierende Magnetkraft zwischen den Schaltkontakten nach, so daß der bewegliche Schaltkontakt 6 in die Ruheposition zurückkehrt, veranlaßt durch die Federkraft der Federzunge 3. Natürlich wird die Ruhelage vom beweglichen Schaltkontakt nur eingenommen, wenn die wirkende Beschleunigungskraft unterhalb eines unteren Grenzwertes liegt.

Fig. 5 zeigt eine Schnittansicht des in Fig. 4 dargestellten Beschleunigungsschalters. In Fig. 5 ist gut erkennbar, daß die elektrische Spule 20 nur aus einer Leiterbahn besteht, die um den Permanentmagneten 8 bzw. den Sockel des feststehenden Schaltkontaktes 7 verläuft, der so den Spulenkern bildet. Damit von der elektrischen Spule 20 ein ausreichend starkes Momentanmagnetfeld erzeugt wird, muß ein relativ hoher Strom durch diese Spule geleitet werden. Andererseits ist es ausreichend, wenn der Stromimpuls nur sehr kurzfristig erzeugt wird, nämlich so lange, bis die seismische Masse 5 in die Ruheposition zurückgekehrt ist. Zweckmäßigerweise wird dazu an die elektrische Spule 20 ein kurzer Stromimpuls mit einem relativ hohen Stromwert angelegt.

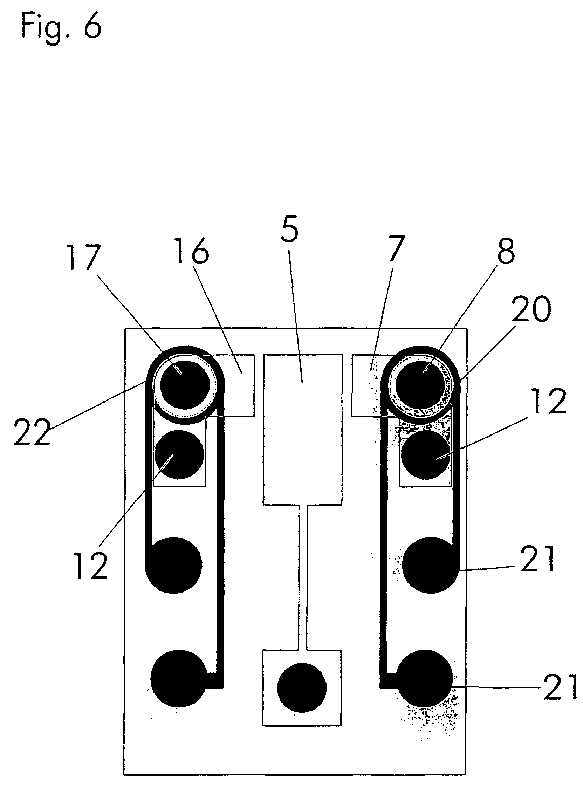

Fig. 6 zeigt in einer Ansicht von oben eine nochmals abgewandelte Ausführungsform des Beschleunigungsschalters. In Weiterbildung der in Fig. 5 gezeigten Ausführungsform ist eine zweite elektrische Spule 22 vorgesehen, die in gleicher Weise wie die elektrische Spule 20 arbeitet und dem Permanentmagnetfeld des zweiten Permanentmagneten 17 ein zweites Momentanmagnetfeld entgegensetzt, um den beweglichen Schaltkontakt von dem zweiten feststehenden Schaltkontakt 16 zu lösen. Dadurch steht ein symmetrischer Beschleunigungsschalter zur Verfügung, mit welchem entgegengesetzt wirkende Beschleunigungskräfte festgestellt werden können und der durch Anlegen kurzer Stromimpulse ein Zurücksetzen des Schalters in die Ruheposition ermöglicht.

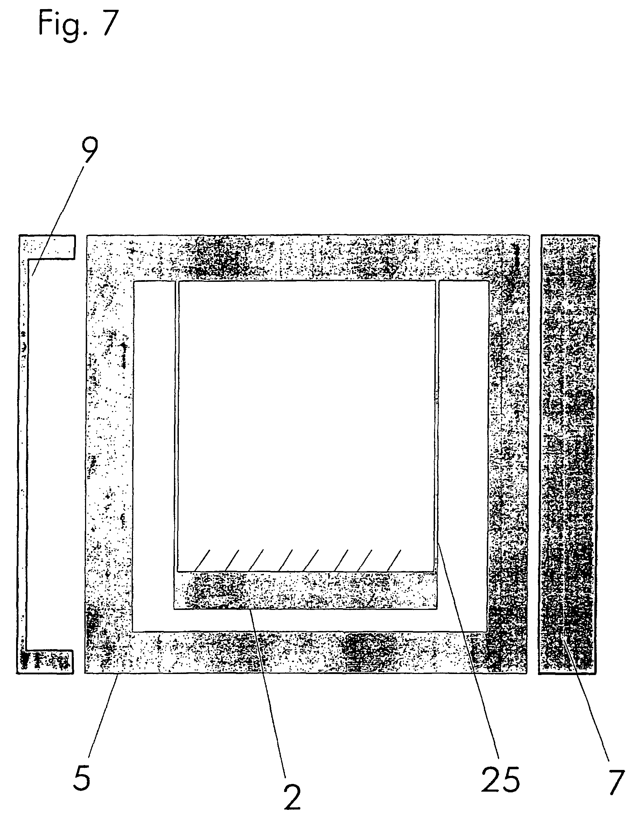

Fig. 7 zeigt in einer vereinfachten Ansicht von oben eine veränderte Variante der Lagerung der seismischen Masse 5. In diesem Fall ist an den Lagerblock 2 eine Parallelfederführung 25 angeschlossen, die beim Einwirken einer Beschleunigungskraft auf die seismische Masse 5 eine Parallelverschiebung dieser Masse bewirkt. Der feststehende Kontakt 7 kann in diesem Fall mit einer größeren Kontaktfläche ausgebildet sein, wodurch der Übergangswiderstand weiter reduziert wird. Der Anschlagblock 9 ist wiederum vorgesehen, um eine übermäßige Auslenkung der seismischen Masse 5 beim Auftreten entgegengesetzter Beschleunigungskräfte zu vermeiden.

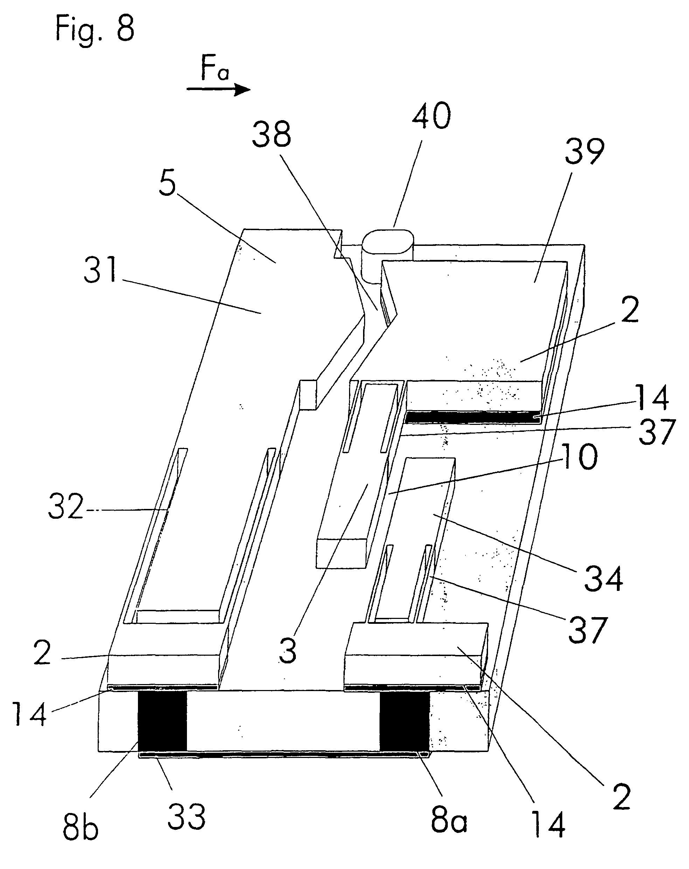

Fig. 8 zeigt eine perspektivische Ansicht des erfindungsgemäßen sensorischen Mikroschalters. Nur in Form eines Anwendungsbeispiels ist der Mikroschalter wieder als Beschleunigungsschalter aufgebaut, wobei generell auch andere Schaltkräfte möglich sind, wie dies weiter unten beschrieben wird. Ziel dieser Ausführungsform ist die Realisierung einer sicheren Schaltfunktion mit einer erhöhten Kontaktkraft, wodurch eine weitere Miniaturisierung des Beschleunigungsschalters möglich wird. Es wird dabei der Nachteil vermieden, daß bei relativ geringen Beschleunigungskräften zwischen den Schaltkontakten zu hohe Übergangswiderstände bestehen, die ein sicheres Feststellen der wirkenden Beschleunigungskraft verhindern.

Bei der Ausführungsform gemäß Fig. 8 ist die seismische Masse 5 nicht unmittelbar an den beweglichen Schaltkontakt gekoppelt sondern an einem eigenständigen Sensorelement 31 angeordnet. Im dargestellten Beispiel ist das Sensorelement 31 über eine Parallelfeder 32 an dem Lagerblock 2 befestigt. Das Sensorelement 31 ist magnetisch zum Permanentmagneten 8 gekoppelt, der hier in zwei Teilmagnete 8a und 8b aufgeteilt ist. Die beiden Teilmagnete sind über ein Flußleitstück 33 verbunden. Weiterhin sind zwei Schaltkontakte 34 vorgesehen, die im dargestellten Beispiel beide beweglich sind und in der Ruheposition durch den Kontaktspalt 10 voneinander beabstandet sind. Die beiden beweglichen Schaltkontakte 34 sind jeweils über weitere Parallelfedern 37 an Lagerblöcken 2 befestigt. Der vom Permanentmagneten 8 erzeugte Magnetfluß durchläuft die Schaltkontakte 34 und den Kontaktspalt 10, fließt, vermittelt über das Flußleitstück 33, durch das Sensorelement 31, von dort über einen Sensorspalt 38 zu einem Sensorgegenstück 39 und dann zurück zu den Schaltkontakten 34. Der ausgebildete Magnetkreis durchströmt somit zumindest zwei Luftspalte. Bei abgewandelten Ausführungsformen könnte das Flußleitstück 33 entfallen und durch einen weiteren Luftspalt ersetzt werden. Eine zu weite Annäherung des Sensorelements 31 an das Sensorgegenstück 39 wird durch einen Begrenzungsanschlag 40 verhindert.

Wenn eine Beschleunigungskraft Fₐ in der durch den Pfeil gekennzeichneten Richtung auf das Sensorelement 31 einwirkt, bewegt sich das Sensorelement in Richtung zum Sensorgegenstück 39, wodurch der Sensorspalt 38 verkleinert wird. Als Gegenkraft wirkt die Federkraft der Parallelfeder 32. Durch die Verringerung des Sensorspalts 38 verringert sich der magnetische Widerstand in diesem Luftspalt, so daß der magnetische Fluß in dem Magnetkreis ansteigt. Die wirksame Magnetkraft ist angenähert proportional dem Quadrat der Flußdichte und einfach proportional zur wirksamen Luftspaltfläche. Daher ist bei gleichem magnetischem Fluß eine höhere Magnetkraft wirksam, wenn die Luftspaltfläche kleiner ist. Bei dem sensorischen Mikroschalter ist die wirksame Fläche des Sensorspalts 38 deutlich größer ausgelegt als die Fläche des Kontaktspaltes 10. Bei einer von der Beschleunigungskraft hervorgerufenen Verringerung des Sensorspalts 38 führt dies zu einer deutlich höheren Magnetkraft im Kontaktspalt 10, wodurch eine Annäherung der Schaltkontakte 34 bewirkt wird, die schließlich zu einem Kontaktieren dieser Schaltkontakte fuhrt, wobei die wirksame Kontaktkraft höher ist als die auf das Sensorelement 31 einwirkende Beschleunigungskraft. Wenn die seismische Masse bzw. das Sensorelement bei nachlassender Beschleunigungskraft in die Ruhelage zurückkehrt, öffnen sich auch die Schaltkontakte 34 wieder (bei der in Fig. 8 dargestellten Ausführungsform).

Bei anderen Ausführungsformen kann die Schaltkraft nicht eine Beschleunigungskraft sondern eine beliebige andere Kraft sein, die durch eine Zustandsänderung hervorgerufen wird, welche zu überwachen ist. Beispielsweise kann das Sensorelement 31 ein temperaturempfindliches Bi-Metall sein, so daß die Schaltkraft aufgrund einer Temperaturänderung hervorgerufen wird.

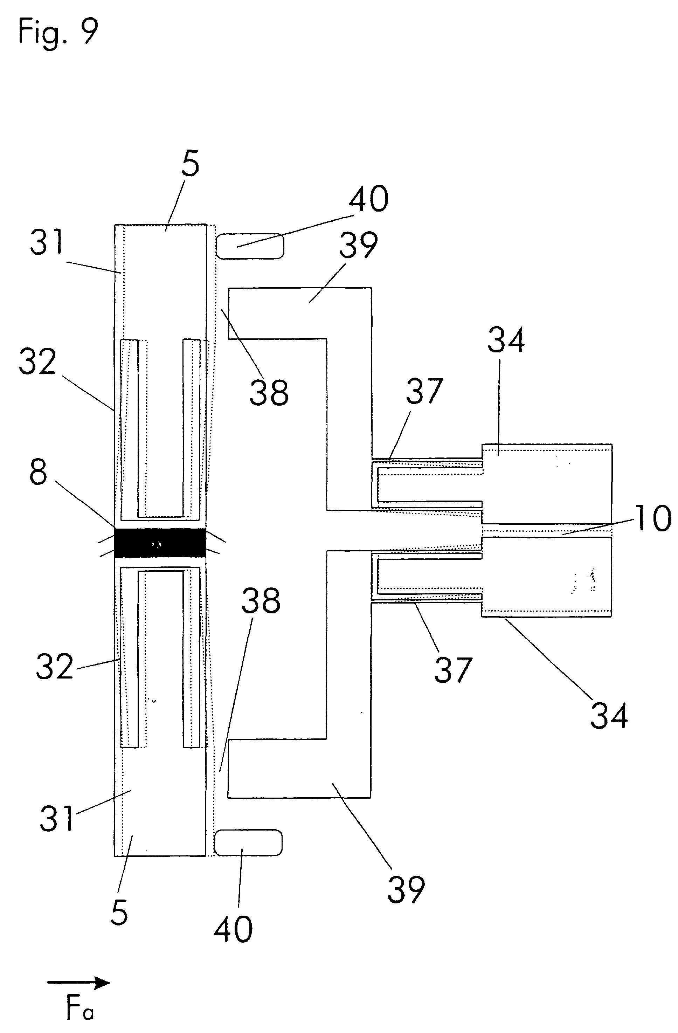

Fig. 9 zeigt den prinzipiellen Aufbau einer abgewandelten Ausführungsform des sensorischen Mikroschalters, wobei auch hier ein Verstärkung der Kontaktkraft durch Verwendung von Sensorspalt und Kontaktspalt erzielt wird. Das Sensorelement 31 ist symmetrisch aufgebaut, wobei zwei seismische Massen 5 jeweils an Parallelfedern 32 gelagert sind. An ihrem festen Ende sind die Parallelfedern 32 eingespannt und unmittelbar mit dem Permanentmagneten 8 gekoppelt, der bei dieser Ausführungsform in derselben Ebene wie die seismische Masse angeordnet ist. Der Hauptteil des magnetischen Flusses verläuft daher parallel zur Oberfläche der nicht gezeigten Grundplatte. Bei einer einwirkenden Beschleunigungskraft Fₐ bewegt sich das Sensorelement 31 an beiden Enden bist zum Begrenzungsanschlag 40, so daß sich der Sensorspalt 38 verringert. Damit erhöht sich wiederum der Magnetfluß, wodurch auch der Kontaktspalt 10 verringert wird, bis die Schaltkontakte 34 schließen. Die Positionen der einzelnen Elemente des Mikroschalters zum Zeitpunktes der Beschleunigungskraft Fₐ sind in der Fig. 9 durch gestrichelte Linien verdeutlicht.

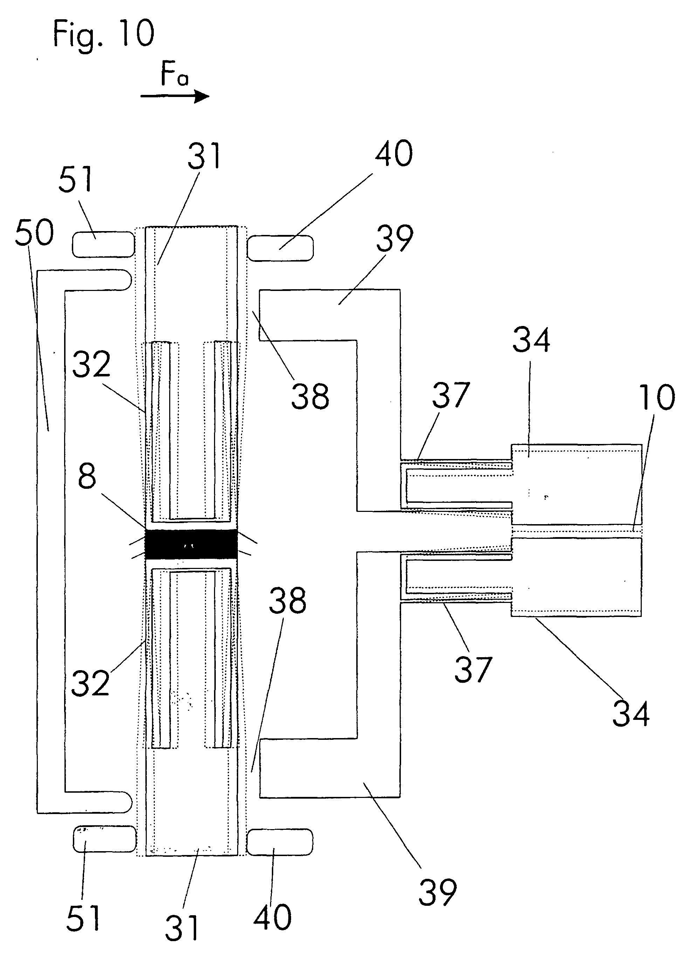

Fig. 10 zeigt eine nochmals abgewandelte Ausführungsform des Beschleunigungsschalters, der in seinem Aufbau stark der Ausführungsform gemäß Fig. 9 ähnelt. Jedoch wird bei dieser Gestaltung zusätzlich ein häufiges Problem bekannter Beschleunigungssensoren gelöst. Herkömmliche Beschleunigungssensoren neigen aufgrund des vorhandenen Feder-Masse-Systems zu einem unerwünschten Aufschwingverhalten, wenn die eingeprägte Beschleunigungskraft mit einer Frequenz auftritt, die im Bereich der Eigenresonanz des Beschleunigungsschalters liegt. Zumeist wird zur Vermeidung solcher Schwingungen auf ein Dämpfungselement zurückgegriffen. Dämpfungselemente können jedoch in mikrotechnisch erzeugten Mikrosystemen nicht oder nur mit erheblichem Aufwand realisiert werden. Generell kann das Aufschwingen durch mechanisches Vorspannen der verwendeten Federn verhindert werden. Eine solche mechanische Vorspannung ist mikrotechnisch jedoch kaum zu realisieren.

Bei der in Fig. 10 gezeigten Ausführungsform werden die Parallelfedern 32 durch eine Magnetkraft vorgespannt. Dazu wird über ein Rückflußleitstück 50 ein magnetischer Fluß erzeugt, der das Sensorelement 31 vom Sensorgegenstück 39 weg biegt. Wenn keine Beschleunigungskraft eingeprägt wird, liegt das Sensorelement 31 beidseitig an Rückbegrenzungsanschlägen 51 an, wie dies wiederum durch gestrichelte Linien verdeutlicht wird. Diese Rückhaltekraft ist so dimensioniert, daß eine Beschleunigungskraft Fₐ die Rückhaltekraft überwinden kann und die Sensorelemente 31 zum Sensorgegenstück 39 bewegt, sobald die Beschleunigungskraft eine vorbestimmte Größe überschreitet. Wenn keine Beschleunigungskraft anliegt, wird das Sensorelement 31 aus der Ruheposition zurück an die Rückbegrenzungsanschläge 51 gezogen. Dadurch kann ein Aufschwingen des Systems sicher vermieden werden.

Wie bereits erwähnt wurde, kann die Beschleunigungskraft als Schaltkraft durch andere Kräfte ersetzt werden. Der dargestellte sensorisch Mikroschalter kann beispielsweise zur Detektion von Temperaturschwellwerten, Druckschwellwerten oder auch als mechanischer Taster eingesetzt werden. Die spezielle Gestaltung des Schalters mit einem Sensorspalt und einem Kontaktspalt bewirkt letztlich eine Kraftverstärkung, so daß mit einem mikrotechnischen System auch relativ kleine Kräfte feststellbar sind.

### Bezugszeichenliste

- 1.: Grundplatte
- 2.: Lagerblock
- 3.: Federzunge
- 5.: seismische Masse
- 6.: beweglicher Schaltkontakt
- 7.: feststehender Schaltkontakt
- 8.: Permanentmagnet
- 9.: Anschlagblock
- 10.: Kontaktspalt
- 11.: Durchgangslöcher
- 12.: Durchkontakte
- 13.: Lötkontakte
- 14.: Distanzstück
- 16.: zweiter feststehender Schaltkontakt
- 17.: zweiter Permanentmagnet
- 20.: elektrische Spule
- 21.: Anschlußkontakte
- 22.: zweite elektrische Spule
- 31.: Sensorelement
- 32.: Parallelfeder
- 33.: Flußleitstück
- 34.: zwei bewegliche Schaltkontakte
- 37.: Parallelfedern der Kontakte 34
- 38.: Sensorspalt
- 39.: Sensorgegenstück
- 40.: Begrenzungsanschlag
- 50.: Rückflußleitstück
- 51.: Rückbegrenzunganschläge

## Patentansprüche

1. Sensorischer Mikroschalter mit mindestens zwei Schaltkontakten (34), die in einer Ruhelage durch einen Kontaktspalt (10) voneinander beabstandet sind, wobei mindestens einer der Schaltkontakte (34) beweglich gelagert ist, wobei mindestens eine Kontaktfeder (37) den beweglichen Schaltkontakt in seiner Ruhelage hält,
wobei ein feststehender Permanentmagneten (8) angeordnet ist,
wobei ein beweglich gelagertes Sensorelement (31) angeordnet ist, auf welches die Schaltkraft einwirkt und welches durch einen Sensorspalt (38) von einem Sensorgegenstück (39) beabstandet ist,
wobei der vom Permanentmagneten (8) gespeiste Magnetkreis durch die beiden Schaltkontakte (34), den dazwischen liegenden Kontaktspalt (10), das Sensorelement (31), das Sensorgegenstück (39) und den Sensorspalt (38) verläuft,
und wobei der Kontaktspalt (10), der Sensorspalt (38), die wirksame Magnetkraft und die Kontaktfederkraft so dimensioniert sind, dass die beiden Schaltkontakte (34) geschlossen werden, wenn der Sensorspalt (38) durch die einwirkende Schaltkraft verkleinert wird.

2. Mikroschalter nach Anspruch 1, **dadurch gekennzeichnet, daß** beide Schaltkontakte (34) an Kontaktfedern (37) beweglich gelagert sind.

3. Mikroschalter nach Anspruch 1 oder 2, **dadurch gekennzeichnet, daß** die Querschnittsfläche des Sensorspalts (38) größer als die Querschnittsfläche des Kontaktspalts (10) ist.

4. Mikroschalter nach einem der Ansprüche 1 bis 3, **dadurch gekennzeichnet, daß** das Sensorelement (31) eine seismische Masse (5) umfaßt und daß die Schaltkraft eine auf diese seismische Masse einwirkende Beschleunigungskraft (Fₐ) ist.

5. Mikroschalter nach Anspruch 4, **dadurch gekennzeichnet, daß** die seismische Masse (5) auf zwei Sensorelemente (31) aufgeteilt ist, die symmetrisch an den Permanentmagneten (8) über Parallelfedern (32) gekoppelt sind, daß zwei Sensorgegenstücke (39) den beiden Sensorelementen (31) getrennt durch den Sensorspalt (38) gegenüberliegen, und daß beide Schaltkontakte (34) beweglich ausgebildet sind und über zwei weitere Parallelfedern (37) an die Sensorgegenstücke (39) gekoppelt sind.

6. Mikroschalter nach Anspruch 5, **dadurch gekennzeichnet, daß** auf der den Sensorgegenstücken (39) gegenüberliegenden Seite der Sensorelemente (31) weiterhin ein Rückflußleitstück (50) und zwei Rückbegrenzungsanschläge (51) vorhanden sind, wobei über das Rückflußleitstück und die beiden Sensorelemente (31) ein magnetischer Rückfluß ausgebildet ist, der die Sensorelemente mit einer magnetischen Rückzugskraft an den Rückbegrenzungsanschlag anzieht, wenn keine der magnetischen Rückzugskraft entgegen gerichtete Beschleunigungskraft (Fₐ) einwirkt.

7. Mikroschalter nach einem der Ansprüche 1 bis 6, **dadurch gekennzeichnet, daß** der Kontaktspalt (10), die wirksame Magnetkraft, die Kontaktfederkraft und der Sensorspalt (38) dimensioniert sind, um die Schaltkontakte (34) in der geschlossenen Position zu fixieren, wenn die Schaltkraft den Schwellwert kurzfristig überschritten hat.

8. Mikroschalter nach Anspruch 7, **dadurch gekennzeichnet, daß** weiterhin ein Elektromagnet (20) angeordnet ist, durch welchen im stromduchflossenen Zustand ein Momentanmagnetfeld induziert wird, welches dem Permanentmagnetfeld entgegenwirkt und die Schaltkontakte in die Ruhelage zurückversetzt.

9. Mikroschalter nach einem der Ansprüche 1 bis 8, **dadurch gekennzeichnet, daß** die Schaltkontakte (34) im wesentlichen aus Material mit weicheisenmagnetischen Eigenschaften bestehen.

10. Mikroschalter nach einem der Ansprüche 1 bis 9, **dadurch gekennzeichnet, dass** er in mehreren lithographischen und/oder mikrotechnischen Verfahrensschritten herstellbar ist.

## Claims

1. A sensor microswitch having at least two switching contacts (34) which, in an at rest position, are spaced apart by a contact gap (10), wherein at least one of the switching contacts (34) is movably carried, wherein at least one contact spring (37) retains the movable switching contact in its at rest position,
wherein there is disposed a stationary permanent magnet (8),
wherein there is disposed a movably carried sensor element (31) upon which the switching force is acting, said sensor element being spaced from a sensor mating part (39) by a sensor gap (38),
wherein the magnetic circuit, which is fed by the permanent magnet (8), passes through the two switching contacts (34), the intermediate gap (10), the sensor element (31), the sensor mating part (39) and the sensor gap (38) and
wherein the contact gap (10), the sensor gap (38), the effective magnetic force and the force of the contact spring are dimensioned such that the two switching contacts (34) close when the sensor gap (38) becomes smaller as a result of the switching force acting thereon.

2. The microswitch in accordance with claim 1, **characterized in that** the two switching contacts (34) are movably mounted on the contact springs (37).

3. The microswitch in accordance with claim 1 or 2, **characterized in that** the cross-sectional area of the sensor gap (38) is greater than the cross-sectional area of the contact gap (10).

4. The microswitch in accordance with any of the claims 1 through 3, **characterized in that** the sensor element (31) comprises a seismic mass (5) and that the switching force is an acceleration force (Fₐ) acting on said seismic mass.

5. The microswitch in accordance with claim 4, **characterized in that** the seismic mass (5) is distributed between two sensor elements (31) that are symmetrically coupled to the permanent magnet (8) through parallel springs (32), that two sensor mating parts (39) are disposed opposite the two sensor elements (31) from which they are spaced by the sensor gap (38), and that the two switching contacts (34) are configured to be movable and are coupled to the sensor mating parts (39) through two additional parallel springs (37).

6. The microswitch in accordance with claim 5, **characterized in that**, on the side of the sensor elements (31) confronting the sensor mating parts (39), there are further provided a return flux conducting portion (50) and two return limit stops (51), the return flux conducting portion and the two sensor elements (31) causing a magnetic return flux to be formed, said magnetic return flux attracting the sensor elements, with a magnetic restoring force, toward the return limit stop when no acceleration force (Fₐ) opposes the magnetic restoring force.

7. The microswitch in accordance with any of the claims 1 through 6, **characterized in that** the contact gap (10), the effective magnetic force, the force of the contact spring and the sensor gap (38) are dimensioned so as to secure the switching contacts (34) in their closed position when the switching force temporarily exceeds the threshold value.

8. The microswitch in accordance with claim 7, **characterized in that** there is further disposed an electromagnet (20) that, as current is flowing therethrough, induces an instantaneous magnetic field which counteracts the permanent magnetic field and causes the switching contacts to return to their at rest position.

9. The microswitch in accordance with any of the claims 1 through 8, **characterized in that** the switching contacts (34) substantially consist of a material exhibiting the properties of soft magnetic iron.

10. The microswitch in accordance with any of the claims 1 through 9, **characterized in that** it is adapted to be manufactured in a plurality of lithographic and/or microtechnical method steps.

## Revendications

1. Microcommutateur à capteur avec au moins deux contacts de commutation (34) qui, en position de repos, sont séparés l'un de l'autre par un intervalle (10) entre les contacts, où au moins un des contacts de commutation (34) est monté de manière à être mobile, où au moins une lame porte-contact (37) retient le contact de commutation dans sa position de repos,
où un aimant permanent (8) fixe est prévu,
où un élément capteur (31) monté mobile est prévu, la force de commutation agissant sur ledit élément capteur qui est séparé d'une pièce complémentaire (39) du capteur par un espace (38),
où le circuit magnétique alimenté par l'aimant permanent (8) passe par les deux contacts de commutation (34), par l'intervalle (10) ménagé entre ces derniers, par l'élément capteur (31), la pièce complémentaire (39) du capteur et l'espace (38) entre ceux-ci,
et où l'intervalle (10) entre les contacts, l'espace (38) entre l'élément capteur et sa pièce complémentaire, la force magnétique effective et la force de la lame porte-contact sont dimensionnés de telle sorte que les deux contacts de commutation (34) se ferment lorsque l'espace (38) entre l'élément capteur et sa pièce complémentaire diminue sous l'effet de la force de commutation.

2. Microcommutateur selon la revendication 1, **caractérisé en ce que** les deux contacts de commutation (34) sont montés mobiles sur des lames (37) porte-contact.

3. Microcommutateur selon la revendication 1 ou 2, **caractérisé en ce que** l'aire de section transversale de l'espace (38) entre l'élément capteur et sa pièce complémentaire est supérieure à l'aire de section transversale de l'intervalle (10) entre les contacts.

4. Microcommutateur selon l'une quelconque des revendications 1 à 3, **caractérisé en ce que** l'élément capteur (31) comprend une masse sismique et que la force de commutation est une force d'accélération (Fₐ) agissant sur ladite masse sismique.

5. Microcommutateur selon la revendication 4, **caractérisé en ce que** la masse sismique (5) est répartie entre deux éléments capteurs (31) couplés symétriquement à l'aimant permanent (8) par le biais de ressorts en parallèle (32), que deux pièces complémentaires (39) de capteur, séparées des deux éléments capteurs (31) par l'espace (38), sont situées en regard de ces derniers et que les deux contacts de commutation (34) sont conformés pour être mobiles et sont couplés aux pièces complémentaires (39) de capteur par le biais de deux ressorts en parallèle (37) supplémentaires.

6. Microcommutateur selon la revendication 5, **caractérisé en ce que**, sur la face des éléments capteurs (31) située en regard des pièces complémentaires (39) de capteur, sont prévues par ailleurs une portion conductrice du courant de retour (50) et deux butées de limitation du retour (51), la portion conductrice du courant de retour et les deux éléments capteurs (31) assurant le retour du flux magnétique qui attire, par sa force magnétique de rappel, les éléments capteurs vers la butée de limitation du retour si une force d'accélération (Fₐ) ne s'oppose pas à la force de rappel magnétique.

7. Microcommutateur selon l'une quelconque des revendications 1 à 6, **caractérisé en ce que** l'intervalle (10) entre les contacts, la force magnétique effective, la force de la lame porte-contact et l'espace (38) entre l'élément capteur et sa pièce complémentaire sont dimensionnés de manière à bloquer les contacts de commutation (34) dans leur position fermée lorsque la force de commutation dépasse momentanément le seuil.

8. Microcommutateur selon la revendication 7, **caractérisé en ce qu'**est prévu par ailleurs un électroaimant (20) qui, lorsque le courant le parcourt, crée un champ magnétique momentané qui s'oppose au champ magnétique permanent et ramène les contacts de commutation dans leur position de repos.

9. Microcommutateur selon l'une quelconque des revendications 1 à 8, **caractérisé en ce que** les contacts de commutation (34) sont sensiblement réalisés dans un matériau possédant les propriétés magnétiques du fer doux.

10. Microcommutateur selon l'une quelconque des revendications 1 à 9, **caractérisé en ce qu'**il est destiné à être réalisé en plusieurs étapes selon un procédé lithographique et/ou microtechnique.
